# EUROPEAN PATENT SPECIFICATION

(11) **EP 4 134 934 B1**
(45) Date of publication and mention of the grant of the patent: **24.07.2024**
(21) Application number: 21190412.3
(22) Date of filing: 09.08.2021
(51) Int. Cl.: G08G 1/14

(54) **METHOD OF CONTROLLING OCCUPATION OF A SPACE FOR A VEHICLE**
VERFAHREN ZUR STEUERUNG DER BELEGUNG EINES RAUMS FÜR EIN FAHRZEUG
PROCÉDÉ DE COMMANDE D'OCCUPATION D'UN ESPACE POUR UN VÉHICULE

(43) Date of publication of application: 15.02.2023
(73) Proprietor: Di Tondo, Pierfilippo, 6945 Origlio (CH)
(72) Inventor: Di Tondo, Pierfilippo, 6945 Origlio (CH)
(74) Representative: M. Zardi & Co S.A.

(56) References cited:
- EP-A2- 3 273 396
- US-A1- 2014 028 477
- US-A1- 2015 029 041
- US-A1- 2015 183 333
- US-A1- 2018 286 236
- US-A1- 2020 134 963
- US-A1- 2020 242 924

## Description

### Field of application

The present invention relates to a method of controlling occupation of a space for a vehicle, for example an electric car. The invention relates in particular to a method of controlling occupation of the space for a vehicle.

### Prior art

It is known that the number of private vehicles, especially in cities with a high population density, is very high compared to the number of parking spaces available, such that it is becoming particularly problematic to park in a city at a destination which is of interest.

It is also known that the pollution caused by traffic consisting of vehicles powered by internal combustion engines, in particular in cities, may be offset by using electric motor vehicles. In fact, the urgent need to reduce pollution and the effects of global warming during the coming years are already resulting in a significant shift to the use of electric vehicles instead of internal combustion engine vehicles. However, this major change in tendency can only continue if the electric power supply network is improved such that it becomes more widespread and is able to satisfy this increased demand for electric energy.

It is also known that the improvement of the power supply network is struggling to keep pace with the spread of electric vehicles, which, in reality, are already available in order to satisfy the demand of an important sector of the market, such as private car owners, who typically travel distances which are already easily covered by electric vehicles.

The spread of electric vehicles is at present being slowed down by the lack of a sufficiently widespread supply network, and not so much by the cost of the vehicles, which would in fact fall further if there were a larger number of such vehicles present on the market.

There therefore exists the need to design infrastructures which allow more cars to be parked at a destination of interest and possibly also the provision of electric energy for a greater number of electric vehicles. In particular there is a need to design infrastructures which may be provided rapidly, without however giving rise to major installation or management costs.

In this connection the use of the private home of a user in order to park a vehicle or recharge the vehicle, if it is electric, is of great interest. For example, typically during a normal working day, the user may charge the electric vehicle at their home in the evening, disconnect it the next morning, use the vehicle during the day, and then charge it again in the evening.

However, a large number of users do not have the possibility of making use of a charging point at their homes. For example, many vehicles are parked on the roadside by those users who do not have a garage equipped with an electric power socket.

For all these users, the only option available is to recharge their electric vehicle at public charging stations, although this option is limited by the fact that there are few such stations available, as already mentioned above, and also because the charging stations are not used in an efficient manner.

In fact, it often happens that the driver of a vehicle occupies a charging station, and also continues to occupy it once charging has finished, and therefore prevents it from being used by another user; in fact, since the time required to perform electric charging is much longer than the time needed to perform refuelling with petrol, the driver of the vehicle normally does not wait at the charging station for charging to be completed, but instead goes off and comes back to the charging station in order to remove the vehicle some time later after recharging has finished. As a result, the charging station, which is in fact a shared facility, is used by fewer users than the number of users who could actually be catered for.

Furthermore, even the owners of a private charging space at home, once they drive off in their own vehicle, for example to their place of work, may have difficulty finding parking space there or recharging their vehicle, if it is electric. US2018/286236 and US2015/242924 are examples of method to control occupancy of spaces for vehicles.

The technical problem underlying the present invention is that of controlling the occupation of a space for a vehicle in such a way that it is left free again as quickly as possible, and in particular of providing a control method of the aforementioned type without the need, however, for modification of the hardware at the (public or private) stations, thereby solving substantially most of the problems which hitherto prevent more efficient use of the available spaces.

### Summary of the invention

The underlying idea of the present invention is that of controlling the state of occupation of a space by means of the combination of method steps involving the hardware and/or software on-board a vehicle and the hardware and/or software of a portable device of the driver of the vehicle, such as a smartphone, and calculating the cost of occupation.

In particular, in the case of a charging space, the idea is to calculate the cost for occupation depending on the occupation time and not only on the actual charging time which, as is known, may be less, and even more particularly with the aim of performing the aforementioned control steps and calculations without the need for hardware or software adaptation of the already existing stations, therefore opening up the possibility of also using simple private spaces, for example at individual homes, as charging points, and therefore forming a well-equipped charging network potentially able to satisfy immediately a large-scale demand for energy on the part of electric vehicles.

Purely by way of example, therefore, the home of a private citizen, for example a private garage, may become a parking space for a vehicle and optionally also a charging space for the vehicle (if electric) of another citizen, and control of the occupation (or availability) of said private garage is performed by means of a application on the smartphone of the vehicle driver, data processing systems already on-board the vehicle and a data management platform, without the need for modifications to the private garage, but instead converting it into a substantially shared parking or charging space, and a source of revenue for the private citizen, and at the same optimizing the occupation thereof, i.e. encouraging the vehicle driver to remove the vehicle immediately from the space and drive away from it as soon as possible, so that the space and the associated entry area is available again for a new user (i.e. driver of another vehicle).

Such a method is therefore not intended to implement a business method, but instead to solve a very pressing technical problem which is that of expanding the infrastructure for parking or charging electric vehicles and to solve this problem using a sustainable method, with no impact from an installation point of view (e.g. no need for new charging columns) or need for adaptation of the already existing spaces.

On the basis of the idea described above, the Applicant has devised a method of controlling occupation of a space for a vehicle, which comprises the steps of:
- executing an application on a portable device of a driver of the vehicle;
- connecting the application to the vehicle;
- identifying the location of a free space;
- reaching the free space with the vehicle, occupying it, setting the occupied state of the space and starting calculation of the amount of time for which the space is occupied;
- continuing to calculate the occupation time of the space, if the connection of the application with the vehicle is interrupted, or;
- interrupting calculation if the connection of the application to the vehicle is active and the location of the portable device is different from the location of the space, and therefore if the vehicle is at a distance greater than a predetermined distance from the space. Subsequently freeing the space, along with the features as claimed in claim 1.

The method comprises a reservation step. The step of reserving the free space is performed before reaching the free space and is followed by a confirmation of reservation of the space. In particular, in this case, when the vehicle reaches a position at a distance less than the predetermined distance from the free space, the step of calculating the occupation time of the space is started immediately, i.e. said calculation being started before the vehicle reaches the free space, occupying it, and immediately after confirmation of reservation.

In the continuation of the description the method is described mainly in association with the reservation step.

The method thus summarised and then explained in greater detail below offers various advantages, including the possibility of identifying spaces, in particular private spaces, and the possibility of checking the occupied state by means of a smartphone, the vehicle and a data management platform, which is for example cloud-based. The space may be regarded as being occupied and calculation of the occupation time may start on the data management platform when the portable device is at a distance less than a predetermined distance from the space, and at the same time if the smartphone application is connected to the vehicle, in other words confirming that the vehicle is in the same location as the smartphone, and therefore in a position close to the space, after it has been reserved.

After the start of occupation various events may occur. For example, in the event of use of the space for electric charging, the driver may move away from the vehicle, taking with him/herself the smartphone and leaving the charging space occupied by the vehicle, even after charging has actually finished, for example when the battery is fully recharged. In this case, the calculation of the occupation time will continue and will end only when the connection between the application on the smartphone and the device on-board on the electric vehicle has been restored, i.e. when the driver has returned to the charging space with his/her smartphone, and moreover when at the same time the further condition of the portable device being at a distance greater than the predetermined distance from the charging space is satisfied, i.e. when the portable device is no longer in the vicinity of the charging station, therefore allowing release of an occupied state of the charging space and freeing thereof for other users.

Calculation of the occupation time of the space (whether it be a public space or a charging space equipped with a connection to the electric network) continues, at least until the driver moves far enough away from the space, i.e., moves the vehicle to a distance greater than the predetermined distance. Only in this case is the calculation operation terminated.

Similarly, if the driver should walk away from the vehicle, leaving the smartphone inside it with the connection between application and vehicle active, calculation of the occupation time would continue.

On the basis of the idea described above, the technical problem underlying the present invention is solved by a method of controlling occupation of a space for a vehicle according to claim 1. The method comprises the steps of:
- executing an application on a portable device of a driver of the vehicle, said portable device being further provided with a localization system for identifying the location of the portable device;
- connecting the application to the vehicle by means of a WPAN (wireless personal area network) data transmission protocol implemented both on a device which is permanently on-board the vehicle and on the portable device;
- identifying the location of a free space;
- reaching the free space with the vehicle, occupying it, or occupying the space directly if the vehicle is already close to it, setting the occupied state of the space and starting calculation of the amount of time for which the space is occupied;
- continuing to calculate the occupation time of the space, if the connection of the application to the vehicle via the WPAN data transmission protocol is interrupted or
- interrupting calculation of the occupation time of the space, if the connection of the application to the vehicle via the WPAN data transmission protocol is active and the location of the portable device is at a distance less than a predetermined distance from the space.

Preferably, the portable device is a smartphone.

Preferably, the transmission protocol is Bluetooth.

Preferably, the space is situated at a private home or at a public parking spot or at a public station.

Reservation of the free space is performed before reaching the free space, and confirmation of reservation of the space is performed. In this case, it is envisaged reaching with the vehicle a position at a distance less than the predetermined distance (R1) from the free space, and the step of calculating the occupation time of the space is started before the vehicle reaches the space and immediately after confirmation of the reservation.

In particular, the step of performing reservation of the space comprises receiving a confirmation of reservation when the vehicle is at a distance less than a second predetermined distance from the space, less than the predetermined distance. The step of performing the reservation is started by the application when the vehicle (and therefore the portable device) is at a distance greater than the predetermined radius from the space.

The application is connected to a data management platform and receives geographical information from the data management platform regarding the free spaces, including a distance from the location of the portable device.

The space is associated with an account to be credited (in particular a private account) and the application is associated with an account to be debited. A transaction involving the account to be debited and the account to be credited is started from the moment the location of the portable device is situated a distance less than the predetermined distance and the connection of the application to the vehicle via the WPAN data transmission protocol is active. In the case of a charging space, the amount of the transaction is determined following the interruption of charging, resulting in a debit for occupation of the space. Still in the case of a charging space, if necessary, debiting may also be performed for a stay without charging.

The account to be debited and the account to be credited are stored, together with the identification data of the respective owners, on the data management platform.

The data management platform receives from the application a first signal generated by the application when the location of the portable device is at a distance less than the predetermined distance from the free space and the connection of the application to the vehicle via the WPAN data transmission protocol is active, and starts to calculate the occupation time of the space immediately after receiving said first signal, said calculation of the occupation time terminating when the data management platform receives from the application a second signal generated by the application when the location of the portable device is at a distance greater than the predetermined distance from the free space, i.e., does not correspond any longer to the location of the space, and the connection of the application to the vehicle via the WPAN data transmission protocol is active.

At a charging space, the charging column according to the present invention is preferably provided with a network connection to the data management platform.

The charging space receives an enable signal for charging from the data management platform.

The charging space comprises a device provided with the WPAN data transmission protocol, preferably Bluetooth, and the electric vehicle is authorized to be charged if the device on-board the vehicle provided with the WPAN data transmission protocol is paired with the device of the charging space or the smartphone.

Obviously, also for a space used for parking and not for charging, it is possible to envisage a device provided with the WPAN data transmission protocol, such as Bluetooth, and a vehicle (for example, a non-electric vehicle) may be authorized to park if the on-board device of the motor vehicle provided with the WPAN data transmission protocol is paired with the device of the charging space or of the smartphone. In the absence of enabling, access to the space may be prevented, for example by means of a bar or other barrier means, optionally communicating with the parking device provided with Bluetooth.

In another embodiment, the charging space incorporates a device provided with the WPAN data transmission protocol, preferably Bluetooth, and the electric vehicle is authorized for charging if the portable device is paired with the device of the charging space. In this case, preferably, the pairing between the Bluetooth of the portable device and the Bluetooth of the charging space is performed by the application.

Obviously, also for a space which is used for parking, and not for charging, it is possible to envisage a control method based on pairing together of the portable device and a device at the parking space. The vehicle may be authorized to park if the parking space device is paired with the portable device and, in the absence of enabling, access to the space may be denied.

In another embodiment, the network connection is implemented by means of a network device connected to an electric power supply socket provided on the charging column (or a device installed at the parking space). The network device is provided with means for enabling a current supply from the column to the electric vehicle (or vehicle accessing the parking space) or alternatively disabling the supply from the column. The network device is remotely controlled by the data management platform. For example, the network device is provided with an interface for connection to a local wireless network and is connected to a wireless access point of a home network. The access point is provided with an Internet connection to the data management platform. The space comprises at least one occupation sensor, preferably a magnetic or optical sensor, and the calculation of the occupation time of the space is in any case interrupted if the occupation sensor does not detect any occupation.

Further characteristic features and advantages of the method of controlling occupation of a space for a vehicle according to the present invention will become clear from an example of embodiment thereof, provided solely by way of a non-limiting example with reference to the attached figures.

### Brief description of the drawings

Figure 1 is a view which illustrates in schematic form the method of controlling occupation of a space for a vehicle according to the present invention, during an operating step, in particular a space for charging an electric vehicle.
Figure 2 is a schematic view of the control method according to Figure 1 during another operating step.
Figure 3 is a schematic view of the control method according to Figure 1 during a further operating step.
Figure 4 is a schematic view of the control method according to Figure 1 during another operating step.

### Description of the invention

With reference to the attached figures, below an example of embodiment of a method of controlling occupation of a space 2 for a vehicle 1, according to the present invention, is described.

In the example, the vehicle 1 is a motor vehicle and the space 2 is situated at a private home, such as the garage of a house. However, it is also possible for the vehicle to be another type of motor vehicle and/or for the space to be public, for example in a public square. The term *"vehicle",* for example, is also understood as meaning electric scooters or bicycles.

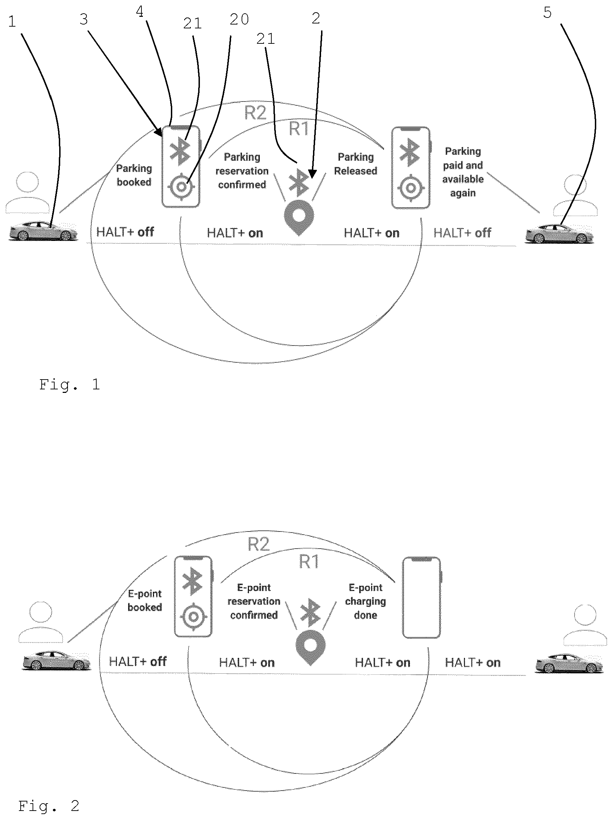

Even more particularly, the example provided with reference to the figures relates to an electric vehicle 1 and the space 2 is a charging space. However, this example does not limit the scope of protection of the present invention, and the method steps described with reference to the example are therefore also valid for controlling a parking space for a vehicle with an internal combustion engine. A predetermined area, for example a circular area with a radius R1 (Fig. 1), is defined around the charging space 2, depending on its geographical location. The location of the charging space 2 and the predetermined area around it (distance R1) are stored in a data management platform, which is for example cloud-based. For this purpose, for example, the owner of the charging space 2 (or a service provider, in the case of a public space) may register the charging space (and therefore its location and the predetermined area with radius R1 or a predetermined distance R1 therefrom), with the data management platform, following registration of a user, i.e., the owner (or service provider), with corresponding personal and banking details, for example a credit card number.

The possible user of the charging space 2 is provided with a portable device 4, for example a smartphone, and is the driver of the electric vehicle 1.

The portable device 4 is equipped with a localization system 20 for identifying the location of the portable device 4 and with radio transmission means 21 which executes a WPAN (wireless personal area network) data transmission protocol, for example the Bluetooth protocol. The vehicle 1 is also provided with radio transmission means which implement a WPAN data transmission protocol compatible with the protocol of the portable device 4, for example the Bluetooth protocol.

For easier illustration, below reference will be made to the Bluetooth protocol or to "Bluetooth" (this being intended to identify radio transmission means which use the Bluetooth protocol), without however limiting the scope of protection of the invention.

The portable device 4 is also provided with an application 3. The application 3 is executed with Bluetooth 21 active and the localization system 20 active. If the Bluetooth of the electric vehicle 1 is also active and is connected to the Bluetooth 21 of the portable device 4, it may be assumed that the location of the electric vehicle corresponds to the location of the portable device 4. The application 3 is therefore able to provide the position of the vehicle, when the Bluetooth connection with the vehicle is active and the localization system 20 of the portable device 4 is active.

On the left-hand side of Figure 1, for example, the electric vehicle 1 is located at a distance greater than a second predetermined distance R2 from the charging space 2, with the Bluetooth of the electric vehicle 1 active and connected to the Bluetooth 21 of the portable device 4.

In this geographical location, the application 3 is not enabled by the data management platform for reservation of the charging space 2, since the distance is too great.

It is assumed below that the electric vehicle 1 changes position and arrives at a location situated at a distance less than the second predetermined distance R2 (but with reference to Figure 1, still greater than the predetermined distance R1).

In this location the data management platform enables the application 3 for reservation of the charging space 2. Therefore, the driver of electric vehicle 1, via the application 3, may request the reservation of the charging space 2. This charging space 2 is for example shown on a map of the application 3.

The charging space 2 is in a free state, set by the data management platform. The data management platform processes the reservation request and confirms the reservation to the application 1.

Only subsequently is the state of the charging space set to "occupied", as explained below.

Firstly, it is assumed below that the electric vehicle 1 changes again position and arrives at a location situated at a distance less than the predetermined distance R1 (but not yet in the charging space 2).

The platform, receiving the new position of the application 3, changes the state of the charging space 2: for as long as the electric vehicle 1 is outside the predetermined area (distance greater than R2). the state is free (HALT+-off). i.e. the charging space 2 can be reserved. When the vehicle enters into the predetermined area (distance less than R1), the state changes to occupied (HALT+-on) and the charging space can no longer be reserved.

The entry of the electric vehicle 1 inside the predetermined area is determined by means of communication, from the application 3 to the data management platform, of the position of the portable device 4. The Bluetooth connection with the electric vehicle 1 must be active.

Once parked at the charging space 2, charging may start.

The example described hitherto is provided with reference to situation in which the user of the application 3, i.e., the driver, identifies the charging (or parking) space at a certain distance therefrom, in which case it is therefore envisaged performing a remote reservation of the space. However, according to an aspect not claimed in the present invention, it is also possible, if the driver is situated already close to a charging space with his/her vehicle when accessing the application 3, for the reservation step to be substantially avoided and to directly occupy the free space.

Returning to the example of Figure 1, the Bluetooth connection between the portable device 4 and the electric vehicle 1 is kept active during electric charging, when the vehicle is inside the area with radius R1, and the location of the portable device 4 continues to correspond to the position of the charging space 2, both known and therefore controlled by the data management platform via the application 3.

Charging is performed and then terminates (during this step, the vehicle is not shown in Figure 1).

Then the electric vehicle 1 is driven to a distance greater than the distance R1 (right-hand side of Figure 1).

Incidentally, the distance R1 is shown in the example in the form of a radius of a circumference having its centre in the charging space 2; however, it is possible to define differently the area inside which the state of the space is changed from free to occupied, confirming the reservation thereof.

Similarly, and again incidentally, the distance R2 is also shown in the example in the form of a radius of a circumference which encloses the circumference with radius R1; however, it is also possible to define differently the area inside which the reservation of the charging space is enabled. Preferably, the definition of the distance R2 does not affect freeing of the charging (or parking) space, after it has been used, since only the distance R1 is considered.

Still with reference to Figure 1, the application 3 communicates to the data management platform the new position of the portable device 4 which corresponds to the position of the electric vehicle 1, since the Bluetooth connection of the electric vehicle 1 with the portable device 4 is still active, as shown in Figure 1 by the symbols 20, 21 which are commonly used, respectively, to indicate the geographical location and the Bluetooth connection.

At this point the state of the charging space 2 is again freed (HALT+-off) by the data management platform and the charging space 2 may be occupied by another vehicle. In order to free the charging space, and therefore set the free state (HALT+-off), it is sufficient for the distance from the charging space to be greater than R1.

The data management platform calculates, for the cost of the charging operation, the time spent by the electric vehicle 1 in the charging space 2 as being the time interval between setting of the occupied state and setting of the free state, and therefore not just the actual time spent in the space 2. The calculation may also comprise the estimated cost of the electric energy potentially used during this time period.

It is therefore in the interest of the driver to remove the electric vehicle as soon as charging has been completed. The economic transaction involving the driver's account to be debited and the account of the owner of the charging space to be credited is managed by the platform. It is therefore very much in the interest of the owner of the charging space to ensure that the space is free.

In Figures 2-4, the reference numbers are not shown since these figures comprise graphical symbols identical to those of Figure 1, in particular the symbols 20 and 21 for indicating the geographical location and the Bluetooth connection. Therefore, it is clear that the graphical symbols in Figures 2-4 indicate technical characteristics of the invention corresponding to those indicated by the reference numbers of Figure 1, when referred to the same graphical symbols.

With reference to Figure 2, this illustrates in schematic form the situation where, during charging, the Bluetooth connection between the portable device 4 and the electric vehicle 1 is lost.

This situation occurs for example if the driver moves out of the radius of action of the Bluetooth device of the electric vehicle, for example in order to go and drink a coffee during charging. The geographical location of the portable device 4 no longer corresponds to the location of the electric vehicle 4. A similar situation, shown in Figure 2, occurs if the localization system 20 is switched off. In all these cases, even at the end of the electric charging, the data management platform continues to calculate the time for which the charging space 2 is occupied. The driver therefore has no interest in occupying the charging space 2 needlessly. The owner of the charging space does not undergo any loss since the occupation of the space is in any case calculated to his/her advantage. Only if:
- the Bluetooth connection with the electric vehicle 1 is reactivated,
- the localization system 21 of the portable device is reactivated, and
- the driver moves the vehicle outside of the predetermined area,
the calculation of the occupation time of the charging space is terminated.

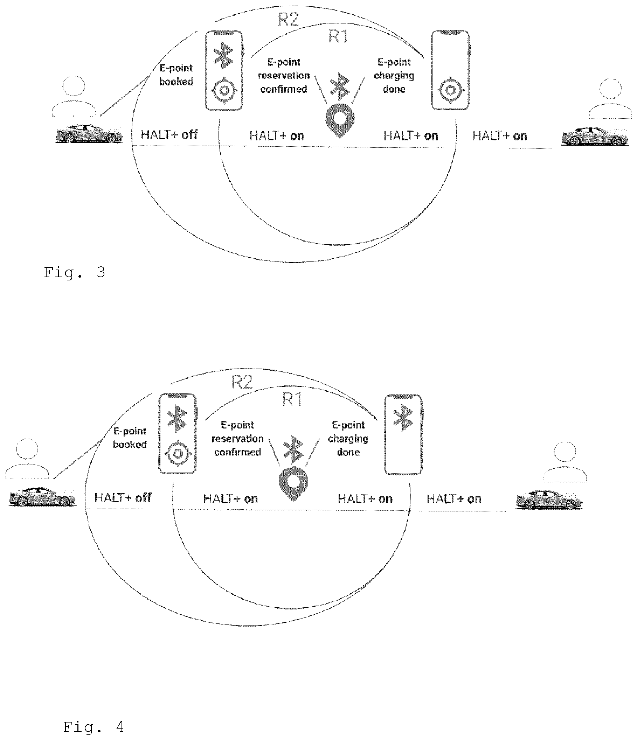

The term "HALT+-on" in Figure 2 (as well as in Figures 3 and 4) indicates the fact that one of the aforementioned conditions is not present and therefore freeing of the parking space is prevented.

Figures 3 and 4 illustrate similar situations. In Figure 4 the driver moves the electric vehicle outside the predetermined area, but without having the localization system 20 active. Therefore, the data management platform does not set the free state of the charging space 2, even though in reality the space is free. Figure 3, as already mentioned with reference to Figure 2, schematically indicates the situation where the driver moves away on foot, with the loss of the Bluetooth connection with the electric vehicle (the same situation occurs when the reception/transmission means 21 are switched off).

It is envisaged that activation and deactivation of the localization system 20 and the reception/transmission means are associated with activation and switching off of the application 3.

The application 3 is programmed to communicate via Internet to the data management platform the information regarding:
- the state of the connection between the Bluetooth of the electric vehicle and the Bluetooth of the portable device;
- the geographical position of the portable device.

The data management platform stores furthermore:
- the geographical position of the space 2;
- the relevant predetermined distance R1;
- the relevant second predetermined distance R2;
and by means of the abovementioned information calculates the free state and occupied state of the charging space.

The graphical symbol 21 of the Bluetooth device in Figure 1 indicates schematically the optional embodiment in which the charging space, for example a charging column, is associated with a Bluetooth device. In this case, the pairing of the Bluetooth device in the charging space 2 with the Bluetooth of the electric vehicle and/or with the Bluetooth of the portable device 4 allows direct verification of the charging space 2/electric vehicle 1 to be performed. In other words, in this case, the driver 5 of the electric vehicle may be allowed to perform electric charging only if the verification operation has a positive outcome; solely by way of example, a charging plug associated with the column could be fastened to an electronic locking device which is released only in the event of positive verification. Such a locking device could simplify the checks which are currently needed before performing charging at a public station, which typically requires the identification of a payment card and therefore increases the occupation time. This specific embodiment, following a small modification of the spaces which are already available, results in a significant improvement of the charging service.

According to one embodiment, the charging space incorporates a device provided with the WPAN data transmission protocol, preferably Bluetooth, and the electric vehicle is authorized for charging if the portable device is paired with the device of the charging space. The pairing between the Bluetooth of the portable device and the Bluetooth of the charging space is performed by the application, without manual operations by the driver.

Similarly, considering a further hardware adaptation in combination with the method already described, it is possible to envisage pairing with a sensor for detecting the presence of the electric vehicle 1 in the charging space, for example a weight sensor, a magnetic sensor or an optical sensor or an infrared ray sensor. In each of these cases, the detection of the electric vehicle, in the absence of a Bluetooth connection with the vehicle, may generate an alarm signal alerting the driver, who may therefore take immediate remedial action.

Modes of implementing the method according to the present invention using dedicated hardware devices are envisaged. For example, it is possible to provide a network connection between the data management platform and the charging space (i.e., a charging column situated therein).

The connection may be performed by means of a network device connected to an electric power supply socket provided on the charging column. This network device may have an interface with a local wireless network, so that it can be connected via a wireless access point of a home network to the data management platform. The access point is provided with an Internet connection to the data management platform.

Furthermore, the network device may be provided with means for enabling the supply of current from the charging column to the electric vehicle or vice versa for disabling the supply from the column and be remotely controlled by the data management platform.

Advantageously, in this case also, substantial modifications to the charging column are not envisaged. In fact, the network device could be simply electrically wired thereto, but in a non-removable manner, and it could be envisaged that the connection of the electric vehicle to the charging column must be necessarily performed via the network device. Therefore, supplying of the electric energy by the column would be subordinated to the verification of the authorizations for charging by the network device (and/or by the data management platform).

The advantages of the method described above are numerous, especially when compared with the pressing need to expand the charging networks for electric vehicles and increase the efficiency, and therefore use, thereof: essentially the unnecessary occupation time of the charging spaces is eliminated, with the (short) delays during removal of the electric vehicle being comparable with the (short) delays which occur when performing the refuelling of a vehicle with an internal combustion engine. Advantageously, the method does not require any modification of the already existing spaces, but, on the contrary, allows the private homes of citizens to be converted into a possible space useful for drivers who require such a service.

## Claims

1. Method of controlling occupation of a space (2) for a vehicle (1), the method comprising the steps of:
- a) executing an application (3) on a portable device (4) of a driver (5) of the vehicle (1), said portable device (4) being provided with a localization system (20) for identifying the location of the portable device (4), and said application (3) being connected to a data management platform for receiving information regarding location and state of spaces (2) set by the data management platform, the state being free or occupied;
- b) connecting the application (3) to the vehicle (1) by means of a WPAN (wireless personal area network) data transmission protocol implemented both on a device which is permanently on-board the vehicle (1) and on the portable device (4), wherein the location of the vehicle (1) is provided by the application (3) to the data management platform as the location identified by the localization system (20);
- c) identifying, by means of said application (3) connected to said data management platform, a space (2) at the free state at a location in the proximity of the location of the vehicle;
- d) transmitting a request of reservation of said space (2) at free state from the application (3) to the data management platform,
- d') confirming the reservation from the data management platform to the application (3);
- e) setting the occupied state of the space (2) in the data management platform and
- f) starting calculation of the amount of time for which the space (2) is occupied in the data management platform;
- g) reaching the space (2) with the vehicle (1) and physically occupying it;
- h) continuing to calculate the occupation time of the space (2), if the connection of the application (3) to the vehicle (1) via the WPAN data transmission protocol is interrupted or
- i) interrupting the calculation of the occupation time of the space (2), if the connection of the application (3) to the vehicle (1) via the WPAN data transmission protocol is active and the location of the portable device (4) is at a distance greater than a predetermined distance (R1) from the space (2), wherein the data management platform set the state of the space (2) at free if calculation is interrupted, wherein said step of calculating the occupation time of the space (2) is started before the space (2) is reached and after confirmation of the reservation, when the vehicle (1) is in a position at a distance less than the predetermined distance (R1) from the space (2).

2. Method of controlling occupation according to claim 1, **characterized in that** the space (2) is associated with an account to be credited and the application (3) is associated with an account to be debited, a transaction involving the account to be debited and the account to be credited being started from when the vehicle (1) reaches a position at a distance less than the predetermined distance (R1) from the space (2) and the connection of the application (3) to the vehicle (1) by means of the WPAN data transmission protocol is active, the amount of the transaction being determined following the end of occupation of the space.

3. Method of controlling occupation according to claims 1 and 2, **characterized in that** the account to be debited and the account to be credited are stored, together with the personal data of the respective owners, in the data management platform.

4. Method of controlling occupation according to claim 3, **characterized in that**
said state of spaces (2) set by the data management platform further include a state reserved;
wherein said step d) of transmitting the request of reservation from the application (3) is enabled at a distance less than a second predetermined distance (R2) from the space (2), the second predetermined distance being greater than said predetermined distance (R1), and
said step d') of confirming the reservation from the data management platform to the application (3) is made at a distance less than the second predetermined distance (R2); and
said step e) of setting the occupied state of the space (2) in the data management platform is made after a step
- d") the data management platform receives from the application (3) a first signal generated by the application (3) when the location of the portable device (4) has changed from being at said second predetermined distance (R2) to a distance less than the predetermined distance (R1) from the free space (2) and the connection of the application (3) to the vehicle (1) via the WPAN data transmission protocol is active, wherein said step f) of starting to calculate the occupation time of the space (2) is made immediately after receiving said first signal, said calculation of the occupation time being terminated when the data management platform receives from the application (3) a second signal generated by the application (3) when the location of the portable device (4) is at a distance greater than the predetermined distance (R1) from the free space (2) and the connection of the application (3) to the vehicle (1) via the WPAN data transmission protocol is active.

5. Method of controlling occupation according to claim 1, **characterized in that** the space (2) is a charging space (2), wherein the location of the charging space (2) and the predetermined distance (R1) from the charging space (2) are registered with the data management platform, wherein charging spaces (2) are shown in a map of the application (3), if the space is equipped with a charging column, said column being provided with a network connection to the data management platform, wherein said step of identifying, by means of said application (3) connected to said data management platform, the space (2) at the free state at a location in the proximity of the location of the vehicle includes identifying the recharging space (2) on the map.

6. Method of controlling occupation according to claim 5, **characterized in that** said network connection is implemented by means of a network device connected to an electric power supply socket provided on the charging column, said network device being provided with means for enabling the supplying of current from the charging column to the electric vehicle, or vice versa, for disabling the supply from the column, said network device being remotely controlled by the data management platform.

7. Method of controlling occupation according to claim 6, **characterized in that** the network device has an interface with a local wireless network and is connected to wireless access point of a home network, the access point being provided with an Internet connection to the data management platform.

8. Method of controlling occupation according to claim 4, **characterized in that** the charging space (2) receives a charging enable signal from the data management platform.

9. Method of controlling occupation according to claim 4, **characterized in that** the charging space (2) incorporates a device provided with the WPAN data transmission protocol, preferably Bluetooth, and the electric vehicle (1) is authorized for charging if the device on-board the vehicle provided with the WPAN data transmission protocol is paired with the device of the charging space (2).

10. Method of controlling occupation according to claim 4, **characterized in that** the charging space (2) incorporates a device provided with the WPAN data transmission protocol, preferably Bluetooth, and the electric vehicle (1) is authorized for charging if the portable device (4) is paired with the charging space (2).

11. Method of controlling occupation according to claim 10, **characterized in that** the step of pairing together the Bluetooth of the portable device (4) and the Bluetooth of the charging space is performed by the application (3).

12. Method of controlling occupation according to claim 1, **characterized in that** the space comprises at least one occupation sensor, preferably a magnetic or optical sensor or an infrared sensor, and the calculation of the occupation time of the space (2) is in any case interrupted if the occupation sensor does not detect any occupation.

## Patentansprüche

1. Verfahren zur Belegungskontrolle eines Raums (2) für ein Fahrzeug (1), wobei das Verfahren die folgenden Schritte umfasst:
- a) Ausführen einer Anwendung (3) auf einem tragbaren Gerät (4) eines Fahrers (5) des Fahrzeugs (1), wobei das tragbare Gerät (4) mit einem Lokalisierungssystem (20) versehen ist, um den Standort des tragbaren Geräts (4) zu identifizieren, und wobei die Anwendung (3) mit einer Datenmanagementplattform verbunden ist, um Informationen über den Ort und den Zustand von Räumen (2) zu erhalten, die von der Datenmanagementplattform festgelegt worden sind, wobei der Zustand frei oder besetzt ist;
- b) Verbinden der Anwendung (3) mit dem Fahrzeug (1) mittels eines WPAN (Wireless Personal Area Network) Datenübertragungsprotokolls, das sowohl auf einer Vorrichtung, welche sich permanent an Bord des Fahrzeugs (1) befindet, als auch auf dem tragbaren Gerät (4) implementiert ist, wobei der Standort des Fahrzeugs (1) von der Anwendung (3) an die Datenmanagementplattform als der vom Lokalisierungssystem (20) identifizierte Standort geliefert wird;
- c) Identifizieren eines Raums (2) mittels der mit der Datenmanagementplattform verbundenen Anwendung (3), der sich im freien Zustand an einem Ort in der Nähe des Standortes des Fahrzeugs befindet;
- d) Übermitteln einer Anfrage zur Reservierung des sich im freien Zustand befindlichen Raums (2) von der Anwendung (3) an die Datenmanagementplattform,
- d') Bestätigen der Reservierung von der Datenmanagementplattform an Die Anwendung (3);
- e) Setzen des Zustands des Raums (2) auf belegt in der Datenmanagementplattform und
- f) Beginnen mit der Berechnung der Zeitspanne in der Datenmanagementplattform, in welcher der Raum (2) belegt ist;
- g) Erreichen des Raums (2) mit dem Fahrzeug (1) und physisches Belegen desselben;
**gekennzeichnet durch**
- h) Fortsetzen der Berechnung der Belegungszeit des Raums (2), wenn die Verbindung der Anwendung (3) mit dem Fahrzeug (1) über das WPAN-Datenübertragungsprotokoll unterbrochen wird, oder
- i) Unterbrechen der Berechnung der Belegungszeit des Raums (2), wenn die Verbindung der Anwendung (3) mit dem Fahrzeug (1) über das WPAN-Datenübertragungsprotokoll aktiv ist und sich der Standort des tragbaren Geräts (4) in einem Abstand befindet, der größer als ein vorbestimmter Abstand (R1) vom Raum (2) ist,
wobei die Datenmanagementplattform den Zustand des Raumes (2) auf frei setzt, wenn die Berechnung unterbrochen wird, wobei der Schritt des Berechnens der Belegungszeit des Raums (2) gestartet wird, bevor der Raum (2) erreicht wird und nach Bestätigung der Reservierung, wenn sich das Fahrzeug (1) in einer Position befindet, die einen geringeren Abstand als den vorbestimmten Abstand (R1) vom Raum (2) aufweist.

2. Verfahren zur Belegungskontrolle nach Anspruch 1, **dadurch gekennzeichnet, dass** der Raum (2) einem gutzuschreibenden Konto zugeordnet ist und die Anwendung (3) einem zu belastenden Konto zugeordnet ist, und eine Transaktion mit dem zu belastenden Konto und dem gutzuschreibenden Konto gestartet wird, wenn das Fahrzeug (1) eine Position erreicht, bei welcher der Abstand von dem Raum (2) kleiner ist als der vorbestimmte Abstand (R1) und die Verbindung der Anwendung (3) mit dem Fahrzeug (1) mittels des das WPAN-Datenübertragungsprotokoll aktiv ist, wobei der Betrag der Transaktion nach dem Ende der Belegung des Raums (2) bestimmt wird.

3. Verfahren zur Belegungskontrolle nach den Ansprüchen 1 und 2, **dadurch gekennzeichnet, dass** das zu belastende Konto und das gutzuschreibende Konto zusammen mit den persönlichen Daten der jeweiligen Inhaber in der Datenmanagementplattform gespeichert werden.

4. Verfahren zur Belegungskontrolle nach Anspruch 3, **dadurch gekennzeichnet, dass** der Zustand der Räume (2), der von der Datenmanagementplattform eingestellt wird, außerdem einen reservierten Zustand enthalten;
wobei der Schritt d) des Übertragens der Reservierungsanfrage von der Anwendung (3) in einer Entfernung ermöglicht wird, die kleiner als ein zweiter vorbestimmter Abstand (R2) vom Raum (2) ist, wobei der zweite vorbestimmte Abstand größer ist als der vorbestimmte Abstand (R1), und
der Schritt d') der Bestätigung der Reservierung von der Datenmanagementplattform an die Anwendung (3) in einem Abstand erfolgt, der geringer ist als der zweite vorbestimmte Abstand (R2); und
der Schritt e) des Einstellens des Zustands des Raums (2) auf belegt in der Datenmanagementplattform nach einem Schritt erfolgt,
- d") die Datenmanagementplattform empfängt von der Anwendung (3) ein erstes Signal, das von der Anwendung (3) erzeugt wird, wenn sich der Standort des tragbaren Geräts (4) vom zweiten vorbestimmten Abstand (R2) auf einem Abstand kleiner als der vorbestimmte Abstand (R1) vom freien Raum (2) geändert hat, und die Verbindung der Anwendung (3) mit dem Fahrzeug (1) über das WPAN-Datenübertragungsprotokoll aktiv ist, wobei der Schritt f) des Beginns der Berechnung der der Belegungszeit des Raums (2) unmittelbar nach dem Empfang des ersten Signals erfolgt, wobei die Berechnung der Belegungszeit beendet wird, wenn die Datenmanagementplattform von der Anwendung (3) ein zweites Signal empfängt, das von der Anwendung (3) erzeugt wird, wenn sich der Standort des tragbaren Geräts (4) in einer Entfernung befindet, die größer ist als der vorbestimmte Abstand (R1) vom freien Raum (2) und die Verbindung der Anwendung (3) mit dem Fahrzeug (1) über das WPAN-Datenübertragungsprotokoll aktiv ist.

5. Verfahren zur Belegungskontrolle nach Anspruch 1, **dadurch gekennzeichnet, dass** der Raum (2) ein Ladeplatz (2) ist, wobei der Standort des Ladeplatzes (2) und der vorbestimmte Abstand (R1) vom Ladeplatz (2) in der Datenmanagementplattform registriert werden, wobei Ladeplätze (2) in einer Karte der Anwendung (3) angezeigt werden, wenn der Platz mit einer Ladesäule ausgestattet ist, wobei die Säule mit einer Netzwerkverbindung zur Datenmanagementplattform versehen ist, wobei der Schritt des Identifizierens des sich im freien Zustand befindlichen Raums (2) an einem Ort in der Nähe des Standortes des Fahrzeugs mittels der Anwendung (3), die mit der Datenmanagementplattform verbunden ist, die Identifizierung des Ladeplatzes (2) auf der Karte umfasst.

6. Verfahren zur Belegungskontrolle nach Anspruch 5, **dadurch gekennzeichnet, dass** die Netzverbindung mittels einer Netzwerkvorrichtung realisiert wird, die an eine an der Ladesäule vorgesehene Stromversorgungsbuchse angeschlossen ist, wobei die Netzwerkvorrichtung mit Mitteln versehen ist, um die Stromversorgung von der Ladesäule zum Elektrofahrzeug oder umgekehrt zu ermöglichen und um die Versorgung von der Säule zu sperren, wobei die Netzwerkvorrichtung von der Datenmanagementplattform ferngesteuert wird.

7. Verfahren zur Belegungskontrolle nach Anspruch 6, **dadurch gekennzeichnet, dass** das Netzwerkgerät eine Schnittstelle mit einem lokalen drahtlosen Netzwerk aufweist und mit einem drahtlosen Zugangspunkt eines Heimnetzwerks verbunden ist, wobei der Zugangspunkt mit einer Internetverbindung zur Datenmanagementplattform versehen ist.

8. Verfahren zur Belegungskontrolle nach Anspruch 4, **dadurch gekennzeichnet, dass** der Ladeplatz (2) ein Ladefreigabesignal von der Datenmanagementplattform erhält.

9. Verfahren zur Belegungskontrolle nach Anspruch 4, **dadurch gekennzeichnet, dass** der Ladeplatz (2) eine Vorrichtung enthält, die mit dem WPAN-Datenübertragungsprotokoll, vorzugsweise Bluetooth, ausgestattet ist, und das Elektrofahrzeug (1) zum Laden freigegeben wird, wenn die sich an Bord des Fahrzeugs befindliche, mit dem WPAN-Datenübertragungsprotokoll ausgestattete Vorrichtung mit der Vorrichtung der Ladestation (2) gekoppelt ist.

10. Verfahren zur Belegungskontrolle nach Anspruch 4, **dadurch gekennzeichnet, dass** der Ladeplatz (2) eine Vorrichtung enthält, die mit dem WPAN-Datenübertragungsprotokoll, vorzugsweise Bluetooth, ausgestattet ist, und das Elektrofahrzeug (1) zum Laden freigegeben wird, wenn das tragbare Gerät (4) mit dem Ladeplatz (2) gekoppelt ist.

11. Verfahren zur Belegungskontrolle nach Anspruch 10,
**dadurch gekennzeichnet, dass** der Schritt des Koppelns des Bluetooth des tragbaren Geräts (4) und des Bluetooth des Ladeplatzes mittels der Anwendung (3) erfolgt.

12. Verfahren zur Belegungskontrolle nach Anspruch 1, **dadurch gekennzeichnet, dass** der Raum mindestens einen Belegungssensor, vorzugsweise einen magnetischen oder optischen Sensor oder einen Infrarotsensor, aufweist, und die Berechnung der Belegungszeit des Raumes (2) in dem Fall unterbrochen wird, dass der Belegungssensor keine Belegung feststellt.

## Revendications

1. Procédé de contrôle d'occupation d'un espace (2) pour un véhicule (1), le procédé comprenant les étapes de :
- a) exécuter une application (3) sur un dispositif portable (4) d'un conducteur (5) du véhicule (1), ledit dispositif portable (4) étant doté d'un système de localisation (20) pour identifier l'emplacement du dispositif portable (4), et ladite application (3) étant connectée à une plate-forme de gestion de données pour recevoir des informations relatives à un emplacement et à un état d'espaces (2) définis par la plate-forme de gestion de données, l'état étant libre ou occupé ;
- b) connecter l'application (3) au véhicule (1) au moyen d'un protocole de transmission de données WPAN (réseau personnel sans fil) mis en œuvre à la fois sur un dispositif qui est en permanence à bord du véhicule (1) et sur le dispositif portable (4), dans lequel l'emplacement du véhicule (1) est fourni par l'application (3) à la plate-forme de gestion de données en tant que l'emplacement identifié par le système de localisation (20) ;
- c) l'identification, au moyen de ladite application (3) connectée à ladite plate-forme de gestion de données, d'un espace (2) dans l'état libre à un emplacement à proximité de l'emplacement du véhicule ;
- d) la transmission d'une demande de réservation dudit espace (2) dans l'état libre depuis l'application (3) à la plate-forme de gestion de données ;
- d') la confirmation de la réservation depuis la plate-forme de gestion de données à l'application (3) ;
- e) la définition de l'état occupé de l'espace (2) dans la plate-forme de gestion de données et
- f) le démarrage d'un calcul de la durée pendant laquelle l'espace (2) est occupé dans la plate-forme de gestion de données ;
- g) l'atteinte de l'espace (2) avec le véhicule (1) et l'occupation physiquement de celui-ci ;
- h) la poursuite du calcul du temps d'occupation de l'espace (2), si la connexion de l'application (3) au véhicule (1) via le protocole de transmission de données WPAN est interrompue ou
- i) l'interruption du calcul du temps d'occupation de l'espace (2), si la connexion de l'application (3) au véhicule (1) via le protocole de transmission de données WPAN est active et l'emplacement du dispositif portable (4) est à une distance supérieure à une distance prédéterminée (R1) de l'espace (2), dans lequel la plate-forme de gestion de données définit que l'état de l'espace (2) est libre si le calcul est interrompu, dans lequel ladite étape de calcul du temps d'occupation de l'espace (2) est démarrée avant d'atteindre l'espace (2) et après la confirmation de la réservation, lorsque le véhicule (1) se trouve dans une position à une distance inférieure à la distance prédéterminée (R1) de l'espace (2).

2. Procédé de contrôle d'occupation selon la revendication 1, **caractérisé en ce que** l'espace (2) est associé à un compte à créditer et l'application (3) est associée à un compte à débiter, une transaction impliquant le compte à débiter et le compte à créditer étant démarrée au moment auquel le véhicule (1) atteint une position à une distance inférieure à la distance prédéterminée (R1) de l'espace (2) et la connexion de l'application (3) au véhicule (1) au moyen du protocole de transmission de données WPAN est active, le montant de la transaction étant déterminé à la suite de la fin d'occupation de l'espace.

3. Procédé de contrôle d'occupation selon les revendications 1 et 2, **caractérisé en ce que** le compte à débiter et le compte à créditer sont stockés, ensemble avec les données personnelles des propriétaires respectifs, dans la plate-forme de gestion de données.

4. Procédé de contrôle d'occupation selon la revendication 3, **caractérisé en ce que**
ledit état d'espace (2) défini par la plate-forme de gestion de données comporte en outre un état réservé ;
dans lequel ladite étape d) de transmission de la demande de réservation depuis l'application (3) est activée à une distance inférieure à une deuxième distance prédéterminée (R2) de l'espace (2), la deuxième distance prédéterminée étant supérieure à ladite distance prédéterminée (R1), et
ladite étape d') de confirmation de la réservation depuis la plate-forme de gestion de données à l'application (3) est réalisée à une distance inférieure à la deuxième distance prédéterminée (R2) ; et
ladite étape e) de définition de l'état occupé de l'espace (2) dans la plate-forme de gestion de données est réalisée après une étape
- d") la plate-forme de gestion de données reçoit, depuis l'application (3), un premier signal généré par l'application (3) lorsque l'emplacement du dispositif portable (4) est passé de ladite deuxième distance prédéterminée (R2) à une distance inférieure à la distance prédéterminée (R1) de l'espace libre (2) et la connexion de l'application (3) au véhicule (1) via le protocole de transmission de données WPAN est active, dans lequel ladite étape f) de démarrage du calcul du temps d'occupation de l'espace (2) est réalisée immédiatement après la réception dudit premier signal, ledit calcul du temps d'occupation étant terminé lorsque la plate-forme de gestion de données reçoit, depuis l'application (3), un deuxième signal généré par l'application (3) lorsque l'emplacement du dispositif portable (4) est à une distance supérieure à la distance prédéterminée (R1) de l'espace libre (2) et la connexion de l'application (3) au véhicule (1) via le protocole de transmission de données WPAN est active.

5. Procédé de contrôle d'occupation selon la revendication 1, **caractérisé en ce que** l'espace (2) est un espace de charge (2), dans lequel l'emplacement de l'espace de charge (2) et la distance prédéterminée (R1) de l'espace de charge (2) sont enregistrés dans la plate-forme de gestion de données, dans lequel des espaces de charge (2) sont représentés sur une carte de l'application (3), si l'espace est équipé d'une colonne de charge, ladite colonne étant dotée d'une connexion de réseau à la plate-forme de gestion de données, dans lequel ladite étape d'identification, au moyen de ladite application (3) connectée à ladite plate-forme de gestion de données, de l'espace (2) dans l'état libre à un emplacement à proximité de l'emplacement du véhicule comporte l'identification de l'espace de charge (2) sur la carte.

6. Procédé de contrôle d'occupation selon la revendication 5, **caractérisé en ce que** ladite connexion de réseau est mise en œuvre au moyen d'un dispositif de réseau connecté à une prise d'alimentation électrique prévue sur la colonne de charge, ledit dispositif de réseau étant doté de moyens pour activer l'alimentation de courant de la colonne de charge au véhicule électrique, ou vice versa, pour désactiver l'alimentation depuis la colonne, ledit dispositif de réseau étant télécommandé par la plate-forme de gestion de données.

7. Procédé de contrôle d'occupation selon la revendication 6, **caractérisé en ce que** le dispositif de réseau présente une interface avec un réseau sans fil local et est connecté à un point d'accès sans fil d'un réseau domestique, le point d'accès étant doté d'une connexion Internet à la plate-forme de gestion de données.

8. Procédé de contrôle d'occupation selon la revendication 4, **caractérisé en ce que** l'espace de charge (2) reçoit un signal d'activation de charge depuis la plate-forme de gestion de données.

9. Procédé de contrôle d'occupation selon la revendication 4, **caractérisé en ce que** l'espace de charge (2) incorpore un dispositif doté du protocole de transmission de données WPAN, de préférence Bluetooth, et le véhicule électrique (1) est autorisé à être chargé si le dispositif à bord du véhicule doté du protocole de transmission de données WPAN est jumelé avec le dispositif de l'espace de charge (2).

10. Procédé de contrôle d'occupation selon la revendication 4, **caractérisé en ce que** l'espace de charge (2) incorpore un dispositif doté du protocole de transmission de données WPAN, de préférence Bluetooth, et le véhicule électrique (1) est autorisé à être chargé si le dispositif portable (4) est jumelé avec l'espace de charge (2).

11. Procédé de contrôle d'occupation selon la revendication 10, **caractérisé en ce que** l'étape de jumelage du Bluetooth du dispositif portable (4) et du Bluetooth de l'espace de charge est réalisée par l'application (3).

12. Procédé de contrôle d'occupation selon la revendication 1, **caractérisé en ce que** l'espace comprend au moins un capteur d'occupation, de préférence un capteur magnétique ou optique ou un capteur infrarouge, et le calcul du temps d'occupation de l'espace (2) est, dans tous les cas, interrompu si le capteur d'occupation ne détecte aucune occupation.
